# EUROPEAN PATENT APPLICATION

(11) **EP 4 818 400 A1**
(43) Date of publication of application: **07.10.2026**
(21) Application number: 24897451.1
(22) Date of filing: 22.11.2024
(51) Int. Cl.: D21H 11/20, C08L 1/08, C08L 101/00

(54) **FIBROUS MATERIAL FOR THERMOFORMING AND COMPOSITE MATERIAL FOR THERMOFORMING**

(30) Priority: 30.11.2023 JP 2023202474
(71) Applicant: DKS Co. Ltd., Kyoto-shi, Kyoto 600-8873 (JP); The University of Tokyo, Bunkyo-ku, Tokyo 113-8654 (JP)
(72) Inventor: GOI Yosuke, Kyoto-shi, Kyoto 600-8873 (JP); ITO Yoshiki, Kyoto-shi, Kyoto 600-8873 (JP); SAITO Tsuguyuki, Tokyo 113-8654 (JP); FUJISAWA Shuji, Tokyo 113-8654 (JP); ISHIOKA Shun, Tokyo 113-8654 (JP); KASAMATSU Masahiro, Tokyo 113-8654 (JP)
(74) Representative: Hoffmann Eitle
(86) International application number: PCT/JP2024/041366
(87) International publication number: WO 2025/115765

(57) **Abstract**

Provided are a fibrous material for thermoforming and a composite material for thermoforming, each containing an anion-modified pulp having thermoformability. A fibrous material for thermoforming according to an embodiment contains an anion-modified pulp in which 45 mol% or more of the anionic groups are in the form of an onium salt. In addition, a composite material for thermoforming according to an embodiment contains: an anion-modified pulp in which 45 mol% or more of the anionic groups are in the form of an onium salt; and a thermoplastic resin.

## Description

### Technical Field

The present invention relates to a fibrous material for thermoforming and a composite material for thermoforming, each containing an anion-modified pulp, and also to a molded article obtained by thermoforming the same.

### Background Art

In recent years, from the viewpoint of sustainability, materials using cellulose fibers, which are biomass abundantly present in nature, have been attracting attention. For example, PTL 1 describes a fiber-reinforced resin composition containing a chemically modified cellulose nanofiber and a thermoplastic resin. As an example, it is described that a resin composition containing a chemically modified cellulose nanofiber and a thermoplastic resin is obtained by kneading a chemically modified pulp with a thermoplastic resin and thereby defibrating the chemically modified pulp.

### Citation List

### Patent Literature

PTL 1: JP2016-176052A

### Summary of Invention

### Technical Problem

Cellulose fibers inherently have no thermoformability, and thus cannot be subjected to thermoforming unless they are added to a resin such as a thermoplastic resin. As described above, the addition of a chemically modified cellulose fiber as a reinforcing material to a thermoplastic resin is conventionally known, but it has been unknown that a specific anion-modified pulp has thermoformability.

An object of an embodiment of the invention is to provide a novel fibrous material for thermoforming and a novel composite material for thermoforming, each containing an anion-modified pulp having thermoformability.

### Solution to Problem

The invention includes the following embodiments.
[1] A fibrous material for thermoforming, containing an anion-modified pulp in which 45 mol% or more of anionic groups are in the form of an onium salt.
[2] The fibrous material for thermoforming according to [1], in which a modifier for converting the anionic groups into an onium salt has a melting point of 150°C or less.
[3] The fibrous material for thermoforming according to [1] or [2], in which the onium salt is a quaternary onium salt.
[4] The fibrous material for thermoforming according to any one of [1] to [3], in which the anion-modified pulp has an anionic group content of 0.5 to 3.0 mmol/g as measured with all of the anionic groups being in the acid form.
[5] A molded article obtained by thermoforming the fibrous material for thermoforming according to any one of [1] to [4].
[6] A composite material for thermoforming, containing: an anion-modified pulp in which 45 mol% or more of anionic groups are in the form of an onium salt; and a thermoplastic resin.
[7] A molded article obtained by thermoforming the composite material for thermoforming according to [6].

### Advantageous Effects of Invention

According to embodiments of the invention, a novel fibrous material for thermoforming and a novel composite material for thermoforming, each containing an anion-modified pulp having thermoformability, can be provided.

### Description of Embodiments

### [Fibrous Material for Thermoforming]

A fibrous material for thermoforming according to this embodiment contains an anion-modified pulp in which 45 mol% or more of the anionic groups are in the form of an onium salt. Here, "fibrous material for thermoforming" refers to a material used for thermoforming, which is in fibrous form. "Thermoforming" refers to a forming method in which a material is softened by heating, formed into a predetermined shape, and then hardened by cooling, and examples thereof include hot pressing, vacuum forming, and pressure forming. Incidentally, softening here does not necessarily mean the melting of the pulp (cellulose fiber), but means that the fibers become more flowable upon heating, and it is believed that fibers stick to one another during thermoforming, solidify in that state upon cooling, and thus can maintain a certain shape. "Fibrous" means having the form of fibers, and such a material may be a collection of fibers, for example, a fiber sheet such as paper or a nonwoven fabric, or may also be cotton-like.

An anion-modified pulp is a pulp into which an anionic group has been introduced, and is obtained by chemically modifying an unmodified pulp. "Pulp" refers to a cellulose fiber extracted by mechanically and/or chemically treating a plant material such as wood. Anionic groups are preferably introduced at least onto the fiber surface of the pulp.

As plant-derived pulps, for example, unbleached softwood kraft pulp (NUKP), bleached softwood kraft pulp (NBKP), unbleached hardwood kraft pulp (LUKP), bleached hardwood kraft pulp (LBKP), unbleached softwood sulfite pulp (NUSP), bleached softwood sulfite pulp (NBSP), thermomechanical pulp (TMP), recycled pulp, recycled paper pulp, and the like can be mentioned. They may be used alone, and it is also possible to use two or more kinds together.

The anionic group may be, for example, at least one selected from the group consisting of a carboxy group, a phosphate group, a sulfate group, a sulfonate group, a nitrate group, and a borate group. Among them, at least one selected from the group consisting of a carboxy group, a phosphate group, and a sulfate group is preferable. These anionic groups may be directly or indirectly bonded to a glucose unit, which is a constituent unit of the cellulose molecule. In the case of indirectly bonding, an alkylene group having 1 to 4 carbon atoms, for example, may be present between a glucose unit and an anionic group. One or more anionic groups may be bonded to all of the glucose units constituting the cellulose molecule, or one or more anionic groups may be bonded to some of the glucose units constituting the cellulose molecule.

In one embodiment, the anion-modified pulp may be, for example, an oxidized cellulose fiber obtained by oxidizing hydroxyl groups of a glucose unit in the cellulose molecule, or a carboxymethylated cellulose fiber obtained by carboxymethylating hydroxyl groups of a glucose unit in the cellulose molecule. The oxidized cellulose fiber may be one in which the hydroxyl group at the C6 position of a glucose unit in the cellulose molecule is selectively oxidized and modified into a carboxy group. An oxidized cellulose fiber can be obtained by oxidizing natural cellulose such as wood pulp in the presence of an N-oxyl compound using a co-oxidant. As the N-oxyl compound, a compound having a nitroxy radical generally used as an oxidation catalyst, such as a piperidine nitroxyoxy radical, is used, and particularly 2,2,6,6-tetramethylpiperidinoxy radical (TEMPO) and 4-acetamido-TEMPO are preferable. An anion-modified cellulose fiber according to a preferred embodiment is a TEMPO-oxidized cellulose fiber that has been oxidized using TEMPO.

In this embodiment, as the anion-modified pulp, one in which 45 mol% or more of the anionic groups are in the form of an onium salt is used. That is, 45 mol% or more of the anionic groups have an onium ion as their counter-ion. As a result of introducing an onium salt at 45 mol% or more, thermoformability (also called heat-softening characteristics) can be imparted to the anion-modified pulp, allowing for thermoforming even without a resin such as a thermoplastic resin being contained. The onium salt introduction rate is preferably 50 mol% or more of the anionic groups, more preferably 70 mol% or more, more preferably 80 mol% or more, more preferably 90 mol% or more, and still more preferably 100 mol%.

In the case where the anionic group is a carboxy group, for example, the onium salt introduction rate is calculated using FT-IR from the onium salt-derived absorption peak area and the acid-form anionic group- derived absorption peak area. At this time, in the case where metal salts are contained as other salts, the metal content is also measured using an ICP emission spectrometer for calculation. In the case where the anionic group is a phosphate group or a sulfate group, the nitrogen content is measured using a total nitrogen analyzer to calculate the onium salt introduction rate. The details of the onium salt introduction rate are as described in the Examples section.

The "onium salt" herein is an onium salt in the broad sense, encompassing not only a salt containing an onium ion resulting from the protonation of a hydride, but also a salt containing a cation in which some or all of the protons of the onium ion are substituted with alkyl groups, arene groups, and the like. As onium salts, for example, ammonium salts, phosphonium salts, sulfonium salts, oxonium salts, and the like can be mentioned. Among them, ammonium salts and phosphonium salts are preferable. They may be used alone, and it is also possible to use two or more kinds together. Here, an arene group refers to a monovalent hydrocarbon group having an aromatic ring, and examples thereof include an aryl group and an aralkyl group.

Examples of ammonium salts include quaternary ammonium salts (e.g., tetraalkylammonium salts such as a tetramethylammonium salt, a tetrabutylammonium salt, a tetraoctylammonium salt, a hexadecyltrimethylammonium salt, a methyltrioctylammonium salt, a tetradecylammonium salt, a trimethyldodecylammonium salt, a trimethyltetradecylammonium salt, a trimethyloctadecylammonium salt, a tributyldodecylammonium salt, a trioctylmethylammonium salt, a tetradodecylammonium salt, an octyldimethylethylammonium salt, a dodecyldimethylethylammonium salt, and a didecyldimethylammonium salt, ammonium salts containing an arene group, such as a benzyltributylammonium salt, a benzyltripropylammonium salt, a benzyltriethylammonium salt, a benzyltrimethylammonium salt, a benzyldimethyldodecylammonium salt, a benzyldimethyltetradecylammonium salt, and a benzyldimethyloctadecylammonium salt, and heterocyclic quaternary ammonium salts such as a 1-ethyl-3-methylimidazolium salt, a dodecylpyridinium salt, a 1-allyl-3-methylimidazolium salt, a 1-butylpyridinium salt, and a 1-butyl-4-methylpyridinium salt), tertiary ammonium salts (e.g., trialkylammonium salts such as a trioctylammonium salt and a trihexylammonium salt), secondary ammonium salts (e.g., dialkylammonium salts such as a dioctylammonium salt, a dibutylammonium salt, a dihexylammonium salt, a didodecylammonium salt, and a distearylammonium salt), and primary ammonium salts (e.g., alkylammonium salts such as a dodecylammonium salt, an oleylammonium salt, and a stearylammonium salt, and alkanolammonium salts such as a diethylene glycol ammonium salt).

Examples of phosphonium salts include quaternary phosphonium salts (e.g., tetraalkylphosphonium salts such as a tributylmethylphosphonium salt, a tributyldodecylphosphonium salt, a tributyltetradecylphosphonium salt, a tributylhexadecylphosphonium salt, a trihexyl(tetradecyl)phosphonium salt, a tetraethylphosphonium salt, a tetrabutylphosphonium salt, and a tetraoctylphosphonium salt, and phosphonium salts containing an arene group, such as a tetraphenylphosphonium salt, a benzyltriphenylphosphonium salt, a methyltriphenylphosphonium salt, an ethyltriphenylphosphonium salt, a butyltriphenylphosphonium salt, and a tetradecyltriphenylphosphonium salt).

Incidentally, one of the onium salts listed above may be used alone, and it is also possible to use two or more kinds together.

As the onium salt, it is preferable that a modifier for converting the anionic groups into an onium salt has a melting point of 150°C or less. When the melting point of the modifier is 150°C or less, the thermoformability can be further improved. The melting point of the modifier is more preferably 100°C or less, and more preferably 50°C or less, and it is still more preferable that the modifier is liquid at room temperature (25°C). The lower limit of the melting point is not particularly limited, and may be, for example, -50°C.

Here, a modifier refers to a compound that forms an onium salt together with acid-form anionic groups. However, in the case where the modifier is a quaternary onium salt, its "melting point" is the melting point measured for an acetate in which the anion forming a salt with the onium ion is replaced with an acetate ion. The melting point is determined as the temperature at which the modifier melts when the temperature of the modifier is gradually increased using a melting point measuring apparatus, and the details are as described in the Examples section.

In order to further improve the thermoformability, it is preferable that the onium salt is a quaternary onium salt. As quaternary onium salts, for example, the quaternary ammonium salts and/or quaternary phosphonium salts described above are preferably used, and it is more preferable to use at least one selected from the group consisting of a tetraalkylammonium salt, an aralkyltrialkylammonium salt, and a tetraalkylphosphonium salt.

The anion-modified pulp preferably has an anionic group content of 0.5 to 3.0 mmol/g, more preferably 1.0 to 2.8 mmol/g, and still more preferably 1.5 to 2.5 mmol/g, as measured with all of the anionic groups being in the acid form. As described above, the anion-modified pulp according to the embodiment is an anion-modified pulp in salt form containing an onium salt. Therefore, for the measurement of the anionic group content, all of the anionic groups are converted into the acid form prior to measurement. The anionic group content is the amount of anionic groups (mmol) per dry mass of the acid-form anion-modified pulp, and can be measured by a known method, specifically by the method described in the Examples section. Incidentally, as used herein, "dry mass" refers to the mass after drying performed at 140°C until the rate of mass change per minute reaches 0.05% or less.

In the anion-modified pulp of this embodiment, the anionic groups may entirely be in the form of an onium salt, or other salts may also be contained together with the onium salt. Other salts are not particularly limited, and, for example, alkali metal salts such as sodium salts and potassium salts, alkaline earth metal salts such as magnesium salts and calcium salts, and the like can be mentioned. In addition, the anionic groups do not all have to be in the salt form (e.g., in the case of a carboxy group, -COOX (wherein X is a cation that forms a salt with a carboxylic acid)), and, in addition to the salt form containing an onium salt, the acid form (in which the counter-ion is H⁺, also called the H-form; e.g., in the case of a carboxy group, -COOH) may also be present.

As described above, an anion-modified pulp is obtained by chemically modifying an unmodified pulp, and is non-defibrated. In this respect, an anion-modified pulp is distinguished from a cellulose nanofiber that is obtained by finely dividing a pulp through defibration. The fiber diameter of an anion-modified pulp is equivalent to that of an untreated pulp, and differs depending on the raw material pulp, but is usually several tens of micrometers. Specifically, the number average fiber width of the anion-modified pulp is preferably 5 to 100 µm, more preferably 10 to 60 µm, and may also be 20 to 40 µm.

The number average fiber width of the anion-modified pulp is measured as follows. Ten photographs of an aqueous suspension of the anion-modified pulp diluted to 0.01 mass% are taken using an optical microscope, 25 fibers are selected from the photographs, the fiber widths (diameters) are measured, and their arithmetic mean is calculated to determine the number average fiber width.

The fibrous material for thermoforming according to this embodiment may be composed only of the anion-modified pulp described above, or may also contain additives as optional components together with the anion-modified pulp. As additives, for example, colorants such as pigments and dyes, waterproofing agents, flame retardants, plasticizers, antioxidants, light stabilizers, fillers, antistatic agents, and the like can be mentioned. As described above, the anion-modified pulp according to this embodiment has thermoformability, and therefore, it is possible to thermoform the anion-modified pulp alone. Therefore, the fibrous material for thermoforming preferably does not contain a resin such as a thermoplastic resin, and can be subjected to thermoforming as it is without the addition of a resin.

The form of the fibrous material for thermoforming according to this embodiment is not particularly limited, and may be, for example, a fiber sheet such as paper or a nonwoven fabric, or may also be cotton-like, as described above.

In the case of forming a fiber sheet, for example, papermaking may be performed using a suspension containing the anion-modified pulp as a paper stock, thereby making paper. Papermaking is the process in which a paper stock is dehydrated by filtration into a sheet-like form, pressed, and dried to make paper. For papermaking, known papermaking machines such as a Fourdrinier wet paper machine, a twin-wire paper machine, a Yankee paper machine, a cylinder paper machine, and a cylinder/short-wire combination paper machine may be used. In addition, for example, it is possible that a suspension containing the anion-modified pulp is filtered under reduced pressure into a sheet-like form, dried, and then pressed to make a fiber sheet. The pressing and drying are preferably performed at a temperature at which the anion-modified pulp is not plasticized. The thickness of the fiber sheet is not particularly limited, and may be, for example, 0.001 to 50 mm, or 0.01 to 5 mm. Incidentally, as used herein, "sheet" and "sheet-like" are concepts that encompass "film" and "film-like", respectively.

By thermoforming the fibrous material for thermoforming, a molded article can be obtained. As described above, thermoforming means that a fibrous material for thermoforming is softened (plasticized) by heating, formed into a predetermined shape, and then hardened by cooling, and, for example, hot pressing, vacuum forming, pressure forming, and the like can be mentioned. The shape of the molded article is not particularly limited, and various shapes such as a sheet-like shape, a plate-like shape, and a three-dimensional structure can be mentioned. As specific molded articles, for example, sheets, packaging materials, tableware (cups, plates, etc.), containers (bottles, trays, etc.), and the like can be mentioned.

Generally, paper made from a pulp has voids between pulps and thus is opaque. In the case of the fibrous material for thermoforming according to this embodiment, as a result of hot pressing, for example, the fibers come into close contact with each other without gaps, and voids are thus eliminated, making it possible to make the material transparent.

In addition, in the case of paper made from an ordinary pulp, even when multiple sheets are stacked and hot-pressed, they are not bonded together; however, in the case of a fiber sheet made of the fibrous material for thermoforming according to this embodiment, when multiple sheets are stacked, and at least a portion thereof is hot-pressed, the fiber sheets can be bonded together at the thermoformed portion, making heat sealing possible. Therefore, a heat-sealable fiber sheet can be provided.

### [Composite Material for Thermoforming]

The composite material for thermoforming according to this embodiment contains the anion-modified pulp described above, in which 45 mol% or more of the anionic groups are in the form of an onium salt, and a thermoplastic resin. The anion-modified pulp has an onium salt and thus softens and becomes more flowable when heated. Therefore, the pulp easily mixes with a heat-melted thermoplastic resin, making it less likely that agglomerates of the anion-modified pulp are formed. Therefore, a molded article with an excellent surface appearance can be obtained, and excellent thermoformability is achieved.

The thermoplastic resin is not particularly limited, and, for example, polyethylene (PE), polypropylene (PP), polyvinyl chloride, polystyrene, polyvinylidene chloride, fluororesin, (meth)acrylic-based resin, polyamide resin, polyester resin, polylactic acid, polycaprolactone, ABS resin, polycarbonate resin, polyphenylene oxide, polyurethane, polyacetal, vinyl ether resin, polysulfone-based resin, and the like can be mentioned. They may be used alone, and it is also possible to use two or more kinds together.

The amount of the anion-modified pulp in the composite material for thermoforming is not particularly limited. For example, in the case where the anion-modified pulp is used as a reinforcing material for a thermoplastic resin, it is preferable that the thermoplastic resin serves as a main component as a matrix, and the amount of the anion-modified pulp may be 0.5 to 50 mass%, or 1 to 30 mass%. In this case, the amount of the thermoplastic resin may be 50 to 99.5 mass%, or 70 to 99 mass%.

The composite material for thermoforming may contain additives as optional components together with the anion-modified pulp and the thermoplastic resin. As additives, for example, colorants such as pigments and dyes, waterproofing agents, flame retardants, plasticizers, antioxidants, light stabilizers, fillers, antistatic agents, and the like can be mentioned.

The method for producing the composite material for thermoforming is not particularly limited, and, for example, a method in which the thermoplastic resin and the anion-modified pulp are mixed at a temperature at which the thermoplastic resin melts can be mentioned. The form of the composite material for thermoforming is not particularly limited, and, for example, sheet-like form, plate-like form, pellet-like form, powder form, filaments, and the like can be mentioned.

By thermoforming the composite material for thermoforming, a molded article can be obtained. Thermoforming means that a composite material for thermoforming is softened by heating, formed into a predetermined shape, and then hardened by cooling, and, for example, hot pressing, vacuum forming, pressure forming, injection molding, extrusion molding, an FDM 3D printer, and the like can be mentioned. The shape of the molded article is not particularly limited, and various shapes such as a sheet-like shape, a plate-like shape, and a three-dimensional structure can be mentioned. As specific molded articles, for example, sheets, packaging materials, tableware (cups, plates, etc.), containers (bottles, trays, etc.), and the like can be mentioned.

### Examples

Hereinafter, examples will be described in detail together with comparative examples. However, the invention is not limited to these examples.

The methods for measuring various physical properties in the examples and comparative examples are as follows.

### [Anionic Group Content (Carboxy Group Content)]

50 mL of an aqueous suspension of an acid-form anion-modified pulp having a pulp concentration of 0.1 mass% was prepared, and the pH was adjusted to about 2.5 with a 0.1 mol/L aqueous hydrochloric acid solution. Next, a 0.05 mol/L aqueous sodium hydroxide solution was added dropwise to the aqueous suspension, and the electrical conductivity was measured. The measurement was continued until the pH reached about 11. The carboxy group content was calculated according to the following formula from the amount of sodium hydroxide (V) consumed in the neutralization stage of a weak acid, in which the change in electrical conductivity was gradual. 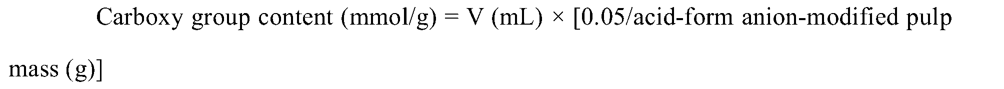 Carboxy group content (mmol/g) = V (mL) × [0.05/acid-form anion-modified pulp mass (g)]

### [Anionic Group Content (Phosphate Group Content)]

An aqueous suspension prepared by diluting an anion-modified pulp with ion exchange water to a content of 0.2 mass% was treated with an ion exchange resin to convert the pulp into an acid-form anion-modified pulp, and then subjected to titration using alkali for measurement. The treatment with an ion exchange resin was performed by adding, to the aqueous suspension, a strongly acidic ion exchange resin (Amberjet 1024; Organo Corporation, conditioned) in an amount of 1/10 the volume of the aqueous suspension, followed by a shaking treatment for 1 hour, and then pouring the mixture onto a mesh with an opening of 90 µm to separate the ion exchange resin from the aqueous suspension. In addition, the titration using alkali was performed by measuring the change in electrical conductivity shown by the aqueous suspension while adding 50 µL of a 0.1 mol/L aqueous sodium hydroxide solution once every 30 seconds to the aqueous suspension after the treatment with an ion exchange resin. The phosphate group content (mmol/g) was calculated by dividing the amount of alkali (mmol) required in the region corresponding to the first region of the measurement result by the solids content (g) in the aqueous suspension to be titrated.

### [Anionic Group Content (Sulfate Group Content)]

A predetermined amount of acid-form anion-modified pulp was combusted. The sulfur content in the combustion products was measured using a combustion ion chromatograph according to a method in accordance with IEC 62321, and converted into the sulfate group content for calculation.

### [Onium Salt Introduction Rate]

The sheets obtained in Examples 1 to 18 and Comparative Examples 1 to 4 as fibrous materials for thermoforming were subjected to FT-IR measurement. The onium salt introduction rate was calculated from the carboxylic acid-derived absorption peak area (near 1720 cm⁻¹) and the carboxylate-derived absorption peak area (1600 cm⁻¹) shown in the following formula. Incidentally, in the case where metal salts were contained as other salts, since the absorption peaks of metal salts and an onium salt appear at the same position, the metal content was also measured using an ICP emission spectrometer for calculation. 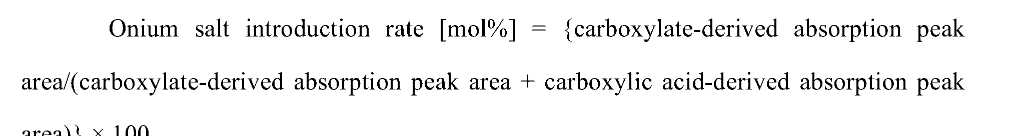 Onium salt introduction rate [mol%] = {carboxylate-derived absorption peak area/(carboxylate-derived absorption peak area + carboxylic acid-derived absorption peak area)} × 100

With respect to the fibrous materials for thermoforming obtained in Examples 19 and 20, the nitrogen content was measured using a total nitrogen analyzer to calculate the onium salt introduction rate.

### [Melting Point of Modifier]

A modifier that is not liquid at room temperature (amine, phosphine, ammonium salt, phosphonium salt, etc.) was finely ground in a mortar and packed into a melting point measurement tube. The melting point measurement tube was set in the recess on the aluminum plate of the melting point measurement apparatus, and a glass cover was placed thereover. The temperature of the melting point measuring apparatus was raised from 25°C at 5°C/min, and the temperature at which the modifier melted was taken as the melting point. Incidentally, in the case of a quaternary onium salt modifier, the melting point was measured for an acetate in which the anion forming a salt with the onium ion was replaced with an acetate ion.

### [Formability]

The sheets obtained in Examples 1 to 20 and Comparative Examples 1 to 4 as fibrous materials for thermoforming were cut to 3 cm in length × 3 cm in width to prepare test pieces. Each test piece was sandwiched between drawing dies and pressed at 100°C and 0.4 MPa using a hot-press apparatus. The obtained molded article was observed and evaluated according to the following criteria.
A: The press time is 10 seconds or less, and a molded article without wrinkles, cracks, etc., can be obtained.
B: The press time is 11 seconds or more and 60 seconds or less, and a molded article without wrinkles, cracks, etc., can be obtained.
C: The press time is 61 seconds or more and 180 seconds or less, and a molded article without wrinkles, cracks, etc., can be obtained.
D: The sheet cracks during pressing, and no molded article can be obtained.

### [Heat-Sealability]

The sheets obtained in Examples 1 to 20 and Comparative Examples 1 to 4 as fibrous materials for thermoforming were cut to 100 mm in length × 15 mm in width to prepare test pieces. Two test pieces were stacked, and an area of 10 mm in length × 15 mm in width was pressed at 100°C and 0.1 MPa using a hot-press apparatus. Using a tensile tester, both non-pressed ends were gripped and T-peeled at a tensile rate of 300 mm/min, and the maximum value was taken as the heat-seal strength. The criteria for judging heat-sealability are shown below.
A: The press time is 10 seconds or less, and the heat-seal strength is 0.1 N/15 mm or more.
B: The press time is 11 seconds or more and 60 seconds or less, and the heat-seal strength is 0.1 N/15 mm or more.
C: The press time is 61 seconds or more and 180 seconds or less, and the heat-seal strength is 0.1 N/15 mm or more.
D: The press time is 180 seconds, and the heat-seal strength is less than 0.1 N/15 mm, or no adhesion occurs.

### [Transparency]

The sheets obtained in Examples 1 to 20 and Comparative Examples 1 to 4 as fibrous materials for thermoforming were cut to 3 cm in length × 3 cm in width to prepare test pieces. Each test piece was sandwiched between polyimide films and pressed at 100°C and 0.4 MPa for 5 minutes using a hot-press apparatus. With respect to the test piece after pressing, the area of the portion that had become transparent was measured using image analysis software. The criteria for judging transparency are shown below.
A: 50% or more of the entire test piece became transparent.
B: 5% or more and less than 50% of the entire test piece became transparent.
C: Less than 5% of the entire test piece became transparent.

### [Surface Appearance of Molded Article]

The composite materials for thermoforming obtained in Examples 21 and 22 and Comparative Example 5 were each pressed at 200°C using a hot-press apparatus and cut to prepare a film measuring 5 cm in length × 5 cm in width × 1 mm in thickness. The criteria for judging the surface appearance of the obtained film are shown below.
A: The number of anion-modified pulp agglomerates was less than 5.
B: The number of anion-modified pulp agglomerates was 5 or more.

### [Preparation of Anion-Modified Pulps A1 to A5]

Prior to the preparation of the materials for thermoforming of the examples and comparative examples, the acid-form anion-modified pulps A1 to A5 used therein were prepared in accordance with the following Production Examples 1 to 5.

### [Production Example 1: Preparation of Anion-Modified Pulp A1 (TEMPO-Oxidized Cellulose Fiber)]

150 mL of water, 0.25 g of sodium bromide, and 0.025 g of TEMPO were added to 2 g of softwood pulp and thoroughly stirred to disperse the pulp. Subsequently, a 13 mass% aqueous sodium hypochlorite solution (co-oxidant) was added such that the amount of sodium hypochlorite per 1.0 g of the pulp was 10.0 mmol/g, and the reaction was initiated. Since the pH decreases as the reaction proceeds, a 0.5 mol/L aqueous sodium hydroxide solution was added dropwise to maintain the pH at 10 to 11, and the reaction was continued until no change in pH was observed (reaction time: 120 minutes). After the completion of the reaction, 0.1 mol/L hydrochloric acid was added to adjust the pH to 2.0, and then purification was performed through repeated filtration and washing with water to obtain a cellulose fiber with the fiber surface being oxidized. Pure water was added thereto for dilution to a cellulose fiber concentration of 4 mass% to prepare a TEMPO-oxidized cellulose fiber suspension. Subsequently, the pH of the slurry was adjusted to 10 with a 24 mass% aqueous sodium hydroxide solution, and then sodium borohydride was added in an amount of 0.2 mmol/g based on the cellulose fiber to initiate the reaction. The reaction was allowed to proceed for 2 hours to perform a reduction treatment. After the reaction, 0.1 mol/L hydrochloric acid was added to adjust the pH to 2.0, and then purification was performed through repeated filtration and washing with water, thereby giving an anion-modified pulp A1 with the carboxy groups being in the acid form.

### [Production Example 2: Preparation of Anion-Modified Pulp A2 (TEMPO-Oxidized Cellulose Fiber)]

An anion-modified pulp A2 with the carboxy groups being in the acid form was obtained in the same manner as in the anion-modified pulp A1 preparation method, except that the amount of aqueous sodium hypochlorite solution added was 6.0 mmol/g per 1.0 g of softwood pulp.

### [Production Example 3: Preparation of Anion-Modified Pulp A3 (TEMPO-Oxidized Cellulose Fiber)]

An anion-modified pulp A3 with the carboxy groups being in the acid form was obtained in the same manner as in the anion-modified pulp A1 preparation method, except that the amount of aqueous sodium hypochlorite solution added was 4.0 mmol/g per 1.0 g of softwood pulp.

### [Production Example 4: Preparation of Anion-Modified Pulp A4 (Phosphate-Esterified Cellulose Fiber)]

A mixed aqueous solution of ammonium dihydrogen phosphate and urea was added to 100 parts by mass (bone-dry mass) of softwood kraft pulp, and the composition was adjusted to 45 parts by mass of ammonium dihydrogen phosphate, 120 parts by mass of urea, and 150 parts by mass of water to obtain a chemical-impregnated pulp. Next, the obtained chemical-impregnated pulp was heated in a hot-air dryer at 165°C for 200 seconds, and a phosphate group was introduced into the cellulose in the pulp to obtain a phosphate-esterified cellulose fiber. After the reaction, 0.1 mol/L hydrochloric acid was added to adjust the pH to 1.0, and then purification was performed through repeated filtration and washing with water, thereby giving an anion-modified pulp A4 with the fiber surface being phosphate-esterified and the phosphate groups being in the acid form.

### [Production Example 5: Preparation of Anion-Modified Pulp A5 (Sulfate-Esterified Cellulose Fiber)]

2 g of softwood kraft pulp, 20 g of sulfamic acid, 50 g of urea, and 100 g of ion exchange water were mixed and stirred for 10 minutes using a stirrer. After stirring, the slurry was suction-filtered using filter paper (No. 2). The suction filtration was performed until the solution stopped dripping. After the suction filtration, the pulp was peeled off from the filter paper. The pulp was placed in a dryer with a thermostatic chamber set at 50°C, and allowed to react for 6 hours. After the reaction, 0.1 mol/L hydrochloric acid was added to adjust the pH to 1.0, and then purification was performed through repeated filtration and washing with water, thereby giving an anion-modified pulp A5 with the fiber surface being sulfated and the sulfate groups being in the acid form.

### [Example 1]

### (Preparation of Modifier)

Tetrabutylammonium bromide (manufactured by Tokyo Chemical Industry Co., Ltd.) was dissolved in ethanol to 0.1 N, and then an ion exchange resin (manufactured by Tokyo Chemical Industry Co., Ltd., Amberlite IRN 78) in an amount five times the amount of tetrabutylammonium bromide was added, followed by stirring overnight using a shaker. Subsequently, the ion exchange resin was removed by filtration, thereby giving a 0.1 N ethanol solution of tetrabutylammonium hydroxide.

### (Introduction of Onium Salt)

The anion-modified pulp A1 was diluted to 0.2 mass% with ethanol, and then a 0.1 N ethanol solution of tetrabutylammonium hydroxide in an amount equimolar to the carboxy group content in the anion-modified pulp A1 was added and stirred at room temperature for 2 hours. The mixture was filtered through a nylon mesh filter with an opening of 59 µm, and the residue remaining on the filter was diluted with ethanol and filtered three times to obtain an anion-modified pulp B1.

### (Preparation of Sheet)

The obtained anion-modified pulp B1 was diluted with ethanol to 0.2 mass% and then filtered under reduced pressure through a nylon mesh filter with an opening of 59 µm to obtain a sheet-like wet deposit. After air-drying at room temperature, the deposit was sandwiched between polyimide films and pressed at 20°C for 5 minutes at 0.1 MPa using a hot-press apparatus, thereby giving a sheet of Example 1 (fibrous material for thermoforming) having a thickness of 100 µm.

### [Example 2]

An anion-modified pulp B2 was obtained by preparing a modifier and introducing an onium salt in the same manner as in Example 1, except that tetraoctylammonium bromide (manufactured by Tokyo Chemical Industry Co., Ltd.) was used. The obtained anion-modified pulp B2 was used to prepare a sheet in the same manner as in Example 1, thereby giving a sheet of Example 2.

### [Example 3]

An anion-modified pulp B3 was obtained by preparing a modifier and introducing an onium salt in the same manner as in Example 1, except that benzyltributylammonium bromide (manufactured by Tokyo Chemical Industry Co., Ltd.) was used. The obtained anion-modified pulp B3 was used to prepare a sheet in the same manner as in Example 1, thereby giving a sheet of Example 3.

### [Example 4]

An anion-modified pulp B4 was obtained by preparing a modifier and introducing an onium salt in the same manner as in Example 1, except that hexadecyltrimethylammonium bromide (manufactured by Tokyo Chemical Industry Co., Ltd.) was used. The obtained anion-modified pulp B4 was used to prepare a sheet in the same manner as in Example 1, thereby giving a sheet of Example 4.

### [Example 5]

An anion-modified pulp B5 was obtained by preparing a modifier and introducing an onium salt in the same manner as in Example 1, except that trihexyl(tetradecyl)phosphonium chloride (manufactured by Tokyo Chemical Industry Co., Ltd.) was used. The obtained anion-modified pulp B5 was used to prepare a sheet in the same manner as in Example 1, thereby giving a sheet of Example 5.

### [Example 6]

An anion-modified pulp B6 was obtained by preparing a modifier and introducing an onium salt in the same manner as in Example 1, except that tetraoctylphosphonium bromide (manufactured by Tokyo Chemical Industry Co., Ltd.) was used. The obtained anion-modified pulp B6 was used to prepare a sheet in the same manner as in Example 1, thereby giving a sheet of Example 6.

### [Example 7]

### (Introduction of Onium Salt)

The anion-modified pulp A1 was diluted to 0.2 mass% with ethanol, and then trioctylamine in an amount equimolar to the carboxy group content in the anion-modified pulp A1 was added and stirred at room temperature for 2 hours. The mixture was filtered through a nylon mesh filter with an opening of 59 µm to obtain an anion-modified pulp B7.

### (Preparation of Sheet)

The obtained anion-modified pulp B7 was diluted with ethanol to 0.2 mass% and then filtered under reduced pressure through a nylon mesh filter with an opening of 59 µm to obtain a sheet-like wet deposit. After air-drying at room temperature, the deposit was sandwiched between polyimide films and pressed at 20°C for 5 minutes at 0.1 MPa using a hot-press apparatus, thereby giving a sheet of Example 7 (fibrous material for thermoforming) having a thickness of 100 µm.

### [Example 8]

An anion-modified pulp B8 was obtained by introducing an onium salt in the same manner as in Example 7, except that dioctylamine was used. The obtained anion-modified pulp B8 was used to prepare a sheet in the same manner as in Example 7, thereby giving a sheet of Example 8.

### [Example 9]

An anion-modified pulp B9 was obtained by introducing an onium salt in the same manner as in Example 7, except that diethylene glycol amine (i.e., 2-(2-aminoethoxy)ethanol) was used. The obtained anion-modified pulp B9 was used to prepare a sheet in the same manner as in Example 7, thereby giving a sheet of Example 9.

### [Example 10]

An anion-modified pulp B10 was obtained by preparing a modifier and introducing an onium salt in the same manner as in Example 1, except that 1-ethyl-3-methylimidazolium chloride (manufactured by Tokyo Chemical Industry Co., Ltd.) was used. The obtained anion-modified pulp B10 was used to prepare a sheet in the same manner as in Example 1, thereby giving a sheet of Example 10.

### [Example 11]

An anion-modified pulp B11 was obtained by preparing a modifier and introducing an onium salt in the same manner as in Example 2, except that the anion-modified pulp A2 was used. The obtained anion-modified pulp B11 was used to prepare a sheet in the same manner as in Example 2, thereby giving a sheet of Example 11.

### [Example 12]

An anion-modified pulp B12 was obtained by preparing a modifier and introducing an onium salt in the same manner as in Example 2, except that the anion-modified pulp A3 was used. The obtained anion-modified pulp B12 was used to prepare a sheet in the same manner as in Example 2, thereby giving a sheet of Example 12.

### [Example 13]

An anion-modified pulp B13 was obtained by preparing a modifier and introducing an onium salt in the same manner as in Example 2, except that a 0.1 N ethanol solution of tetraoctylammonium hydroxide was added in an amount of 0.9 times the molar amount of the carboxy group content in the anion-modified pulp A1. The obtained anion-modified pulp B13 was used to prepare a sheet in the same manner as in Example 2, thereby giving a sheet of Example 13.

### [Example 14]

An anion-modified pulp B14 was obtained by preparing a modifier and introducing an onium salt in the same manner as in Example 2, except that a 0.1 N ethanol solution of tetraoctylammonium hydroxide was added in an amount of 0.75 times the molar amount of the carboxy group content in the anion-modified pulp A1. The obtained anion-modified pulp B14 was used to prepare a sheet in the same manner as in Example 2, thereby giving a sheet of Example 14.

### [Example 15]

An anion-modified pulp B15 was obtained by preparing a modifier and introducing an onium salt in the same manner as in Example 2, except that a 0.1 N ethanol solution of tetraoctylammonium hydroxide was added in an amount of 0.5 times the molar amount of the carboxy group content in the anion-modified pulp A1. The obtained anion-modified pulp B15 was used to prepare a sheet in the same manner as in Example 2, thereby giving a sheet of Example 15.

### [Example 16]

An anion-modified pulp B16 was obtained by preparing a modifier and introducing an onium salt in the same manner as in Example 2, except that a 0.1 N ethanol solution of tetraoctylammonium hydroxide in an amount of 0.5 times the molar amount of the carboxy group content in the anion-modified pulp A1 and a 0.1 N aqueous sodium hydroxide solution in an amount of 0.5 times the molar amount of the carboxy group content in the anion-modified pulp A1 were added. The obtained anion-modified pulp B16 was used to prepare a sheet in the same manner as in Example 2, thereby giving a sheet of Example 16.

### [Example 17]

An anion-modified pulp B17 was obtained by preparing a modifier and introducing an onium salt in the same manner as in Example 2, except that a 0.1 N ethanol solution of tetraoctylammonium hydroxide in an amount of 0.5 times the molar amount of the carboxy group content in the anion-modified pulp A1 and a 0.1 N ethanol solution of benzyltributylammonium hydroxide (see Example 3) in an amount of 0.5 times the molar amount of the carboxy group content in the anion-modified pulp A1 were added. The obtained anion-modified pulp B17 was used to prepare a sheet in the same manner as in Example 2, thereby giving a sheet of Example 17.

### [Example 18]

An anion-modified pulp B18 was obtained by preparing a modifier and introducing an onium salt in the same manner as in Example 2, except that a 0.1 N ethanol solution of tetraoctylammonium hydroxide in an amount of 0.5 times the molar amount of the carboxy group content in the anion-modified pulp A1 and a 0.1 N ethanol solution of hexadecyltrimethylammonium hydroxide (see Example 4) in an amount of 0.5 times the molar amount of the carboxy group content in the anion-modified pulp A1 were added. The obtained anion-modified pulp B18 was used to prepare a sheet in the same manner as in Example 2, thereby giving a sheet of Example 18.

### [Example 19]

An anion-modified pulp B19 was obtained by preparing a modifier and introducing an onium salt in the same manner as in Example 2, except that the anion-modified pulp A4 was used. The obtained anion-modified pulp B19 was used to prepare a sheet in the same manner as in Example 2, thereby giving a sheet of Example 19.

### [Example 20]

An anion-modified pulp B20 was obtained by preparing a modifier and introducing an onium salt in the same manner as in Example 2, except that the anion-modified pulp A5 was used. The obtained anion-modified pulp B20 was used to prepare a sheet in the same manner as in Example 2, thereby giving a sheet of Example 20.

### [Comparative Example 1]

The anion-modified pulp A1 was diluted with ion exchange water to 0.2 mass% and then filtered under reduced pressure through a nylon mesh filter with an opening of 59 µm to obtain a sheet-like wet deposit. After air-drying at room temperature, the deposit was sandwiched between polyimide films and pressed at 20°C for 5 minutes at 0.1 MPa using a hot-press apparatus, thereby giving a sheet of Comparative Example 1 having a thickness of 100 µm.

### [Comparative Example 2]

The anion-modified pulp A1 was diluted with ion exchange water to 0.2 mass% and then neutralized with a 0.1 N aqueous sodium hydroxide solution to a pH (25°C) of 7.0. The mixture was filtered through a nylon mesh filter with an opening of 59 µm to obtain an anion-modified pulp C2 in the sodium salt form. The obtained anion-modified pulp C2 was diluted with ethanol to 0.2 mass% and then filtered under reduced pressure through a nylon mesh filter with an opening of 59 µm to obtain a sheet-like wet deposit. After air-drying at room temperature, the deposit was sandwiched between polyimide films and pressed at 20°C for 5 minutes at 0.1 MPa using a hot-press apparatus, thereby giving a sheet of Comparative Example 2 having a thickness of 100 µm.

### [Comparative Example 3]

An anion-modified pulp C3 was obtained by preparing a modifier and introducing an onium salt in the same manner as in Example 2, except that a 0.1 N ethanol solution of tetraoctylammonium hydroxide in an amount of 0.4 times the molar amount of the carboxy group content in the anion-modified pulp A1 and a 0.1 N aqueous sodium hydroxide solution in an amount of 0.6 times the molar amount of the carboxy group content in the anion-modified pulp A1 were added. The obtained anion-modified pulp C3 was used to prepare a sheet in the same manner as in Example 2, thereby giving a sheet of Comparative Example 3.

### [Comparative Example 4]

An anion-modified pulp C4 was obtained by preparing a modifier and introducing an onium salt in the same manner as in Example 2, except that a 0.1 N ethanol solution of tetraoctylammonium hydroxide was added in an amount of 0.4 times the molar amount of the carboxy group content in the anion-modified pulp A1. The obtained anion-modified pulp C4 was used to prepare a sheet in the same manner as in Example 2, thereby giving a sheet of Comparative Example 4.

The sheets of Examples 1 to 20 and Comparative Examples 1 to 4 prepared above were measured for the onium salt introduction rate, and the formability, heat-sealability, and transparency were evaluated. The results are shown in Table 1.

**[Table 1]**

| | Anionic Group | Anionic Group Content (mmol/g) | Conter-ion 1 | Counter-ion 2 | Onium Salt Introduction Rate (%) | Melting Point of Modifier | Formability | Heat-Sealability | Transparency |
|---|---|---|---|---|---|---|---|---|---|
| Ex. 1 | Carboxy group | 2.2 | Tetrabutylammonium | - | 100 | 95°C | A | A | A |
| Ex. 2 | Carboxy group | 2.2 | Tetraoctylammonium | - | 100 | 25°C or less | A | A | A |
| Ex. 3 | Carboxy group | 2.2 | Benzyltributylammonium | - | 100 | 25°C or less | A | A | A |
| Ex. 4 | Carboxy group | 2.2 | Hexadecyltrimethylammonium | - | 100 | 170°C | C | C | B |
| Ex. 5 | Carboxy group | 2.2 | Trihexyl(tetradecyl)phosphonium | - | 100 | 25°C or less | A | A | A |
| Ex. 6 | Carboxy group | 2.2 | Tetraoctylphzosphonium | - | 100 | 25°C or less | A | A | A |
| Ex. 7 | Carboxy group | 2.2 | Trioctylammonium | - | 100 | 25°C or less | B | B | B |
| Ex. 8 | Carboxy group | 2.2 | Dioctylammonium | - | 100 | 25°C or less | B | B | B |
| Ex. 9 | Carboxy group | 2.2 | Diethylene glycol ammonium | - | 100 | 25°C or less | B | B | B |
| Ex. 10 | Carboxy group | 2.2 | 1-Ethyl-3-methylimidazolium | - | 100 | 85°C | B | B | B |
| Ex. 11 | Carboxy group | 1.5 | Tetraoctylammonium | - | 100 | 25°C or less | A | A | B |
| Ex. 12 | Carboxy group | 1.0 | Tetraoctylammonium | - | 100 | 25°C or less | B | B | B |
| Ex. 13 | Carboxy group | 2.2 | Tetraoctylammonium | H⁺ | 90 | 25°C or less | A | A | A |
| Ex. 14 | Carboxy group | 2.2 | Tetraoctylammonium | H⁺ | 75 | 25°C or less | B | B | B |
| Ex. 15 | Carboxy group | 2.2 | Tetraoctylammonium | H⁺ | 50 | 25°C or less | C | C | B |
| Ex. 16 | Carboxy group | 2.2 | Tetraoctylammonium | Na* | 50 | 25°C or less | C | C | B |
| Ex. 17 | Carboxy group | 2.2 | Tetraoctylammonium | Benzyltributylammonium | 100 (1:1) | 25°C or less | A | A | B |
| Ex. 18 | Carboxy group | 2.2 | Tetraoctylammonium | Hexadecyltrimethylammonium | 100 (1:1) | 25°C or less/ 170°C | B | B | B |
| Ex. 19 | Phosphate group | 2.2 | Tetraoctylammonium | - | 100 | 25°C or less | A | A | A |
| Ex. 20 | Sulfate group | 2.2 | Tetraoctylammonium | - | 100 | 25°C or less | A | A | A |
| Comp. Ex. 1 | Carboxy group | 2.2 | H⁺ | - | 0 | - | D | D | C |
| Comp. Ex. 2 | Carboxy group | 2.2 | Sodium | - | 0 | - | D | D | C |
| Comp. Ex. 3 | Carboxy group | 2.2 | Tetraoctylammonium | Na⁺ | 40 | 25°C or less | D | D | C |
| Comp. Ex. 4 | Carboxy group | 2.2 | Tetraoctylammonium | H⁺ | 40 | 25°C or less | D | D | C |

As shown in Table 1, in Comparative Examples 1 and 2 where no onium salt was introduced and in Comparative Examples 3 and 4 where the onium salt introduction rate was low, the anion-modified pulp did not have thermoformability, and thus the formability, heat-sealability, and transparency were inferior. In contrast, in Examples 1 to 20 where a predetermined amount or more of onium salt was introduced, the pulp had formability in thermoforming and also had heat-sealability, and it was possible to make the sheet transparent. A higher onium salt introduction rate resulted in better formability, heat-sealability, and transparency. In addition, the lower the melting point of the modifier, the better these properties. Further, a quaternary onium salt provided better results for these properties than primary to tertiary onium salts.

### [Example 21]

2 parts by mass of the anion-modified pulp B2 bone-dried was kneaded with 100 parts by mass of polycaprolactone at 200°C and 100 rpm for 10 minutes using a Laboplastomill (manufactured by Toyo Seiki Seisaku-sho, Ltd.) to prepare a composite material for thermoforming of Example 21.

### [Example 21]

A composite material for thermoforming of Example 21 was prepared in the same manner as in Example 21, except that polylactic acid was used instead of polycaprolactone.

### [Comparative Example 5]

2 parts by mass of the anion-modified pulp A1 bone-dried was kneaded with 100 parts by mass of polycaprolactone at 200°C and 100 rpm for 10 minutes using a Laboplastomill (manufactured by Toyo Seiki Seisaku-sho, Ltd.) to prepare a composite material for thermoforming of Comparative Example 5.

With respect to the composite materials for thermoforming of Examples 21 and 22 and Comparative Example 5 prepared above, the surface appearance of molded articles was evaluated. The results are shown in Table 1.

**[Table 2]**

| | Composition | Surface Appearance |
|---|---|---|
| Ex. 21 | Anion-modified pulp B2 (onium salt introduction ratio: 100%)/polycaprolactone = 2/98 | A |
| Ex. 22 | Anion-modified pulp B2 (onium salt introduction ratio: 100%)/polylactic acid = 2/98 | A |
| Comp. Ex. 5 | Anion-modified pulp A1 (onium salt introduction ratio: 0%)/polycaprolactone = 2/98 | B |

As shown in Table 2, the composite material for thermoforming of Comparative Example 5 contained an anion-modified pulp with no onium salt introduced, and therefore many agglomerates were observed on the surface of the molded article obtained by thermoforming. In contrast, the composite materials for thermoforming of Examples 21 and 22 contained an anion-modified pulp having thermoformability imparted by the introduction of an onium salt, and therefore the surface appearance of the molded article obtained by thermoforming was excellent.

Incidentally, with respect to the various numerical ranges described herein, the upper and lower limits thereof can be arbitrarily combined, and all such combinations are incorporated herein as preferred numerical ranges. In addition, the description of a numerical range "X to Y" means X or more and Y or less.

Some embodiments of the invention have been described above. However, these embodiments are presented as examples and not intended to limit the scope of the invention. These embodiments can be practiced in other various modes, and, without departing from the gist of the invention, various omissions, substitutions, and changes can be made thereto. These embodiments, as well as omissions, substitutions, and changes thereto, for example, fall within the scope and gist of the invention, and also fall within the scope of the claimed invention and its equivalents.

## Claims

1. A fibrous material for thermoforming, comprising an anion-modified pulp in which 45 mol% or more of anionic groups are in the form of an onium salt.

2. The fibrous material for thermoforming according to claim 1, wherein a modifier for converting the anionic groups into an onium salt has a melting point of 150°C or less.

3. The fibrous material for thermoforming according to claim 1, wherein the onium salt is a quaternary onium salt.

4. The fibrous material for thermoforming according to claim 1, wherein the anion-modified pulp has an anionic group content of 0.5 to 3.0 mmol/g as measured with all of the anionic groups being in the acid form.

5. A molded article obtained by thermoforming the fibrous material for thermoforming according to any one of claims 1 to 4.

6. A composite material for thermoforming, comprising:
an anion-modified pulp in which 45 mol% or more of anionic groups are in the form of an onium salt; and
a thermoplastic resin.

7. A molded article obtained by thermoforming the composite material for thermoforming according to claim 6.
